# FASCICULE DE BREVET EUROPEEN

(11) **EP 2 359 373 B1**
(45) Date de publication et mention de la délivrance du brevet: **11.10.2017**
(21) Numéro de dépôt: 09795487.9
(22) Date de dépôt: 23.11.2009
(51) Int. Cl.: H02K 7/116, H02K 11/21, G21F 7/06, H02K 5/22

(54) **SERVOMOTEUR À SOUS-ENSEMBLES AMOVIBLES**
SERVOMOTOR MIT ABNEHMBAREN UNTERGRUPPEN
SERVOMOTOR WITH REMOVABLE SUBASSEMBLIES

(30) Priorité: 28.11.2008 FR 0858089
(43) Date de publication de la demande: 24.08.2011
(73) Titulaire: Bernard Controls, 95500 Gonesse (FR)
(72) Inventeur: BERNARD, Etienne, 75016 Paris (FR); AUBERT MAGUERO, Gilles, 75012 Paris (FR)
(74) Mandataire: Thinat, Michel
(86) Numéro de dépôt international: PCT/FR2009/052249
(87) Numéro de publication internationale: WO 2010/061106

(56) Documents cités:
- DE-A1- 3 401 154
- DE-A1- 3 900 866
- FR-A- 2 898 393
- US-A- 4 178 208

## Description

La présente invention a pour objet un servomoteur comprenant des sous-ensembles amovibles. Le servomoteur selon l'invention peut avantageusement être utilisé dans des centrales nucléaires.

Un servomoteur est conçu pour générer un mouvement précis d'un élément mécanique, par exemple une vanne industrielle, selon une commande externe. Un servomoteur est ainsi un système motorisé capable d'atteindre des positions prédéterminées, puis de les maintenir. La position est, dans le cas d'un servomoteur rotatif, une position d'angle, et, dans le cas d'un servomoteur linéaire, une position de distance. Le démarrage et la conservation de la position prédéterminée sont commandés par la commande externe.

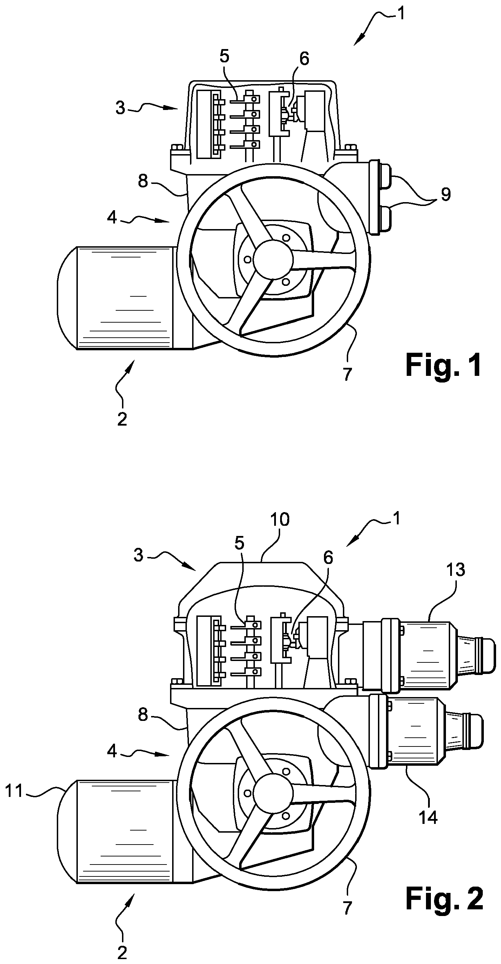

La figure 1 illustre schématiquement un servomoteur 1 de l'état de la technique. Le servomoteur 1 comprend classiquement un ensemble moteur 2 apte à générer un mouvement d'un élément mécanique, un ensemble 3 de détection de position de l'élément mécanique, ainsi qu'un ensemble 4 de commande manuelle de l'élément mécanique. L'ensemble moteur 2 et l'ensemble 3 de détection de position sont adjacents à l'ensemble 4 de commande manuelle.

L'ensemble 3 de détection de position de l'élément mécanique comprend par exemple un système 5 de détection de fin de course apte à mesurer la distance parcourue par l'élément mécanique et à indiquer si la position finale de l'élément mécanique est atteinte. Un système permet la mesure du couple appliqué sur l'élément mécanique. L'ensemble 3 de détection de position de l'élément mécanique peut également comprendre un limiteur d'effort 6.

L'ensemble 4 de commande manuelle est actionné par des moyens actionnant 7, typiquement un volant 7, permettant de commander manuellement l'élément mécanique, par l'intermédiaire d'un réducteur de l'ensemble 4 de commande manuelle. La commande manuelle peut notamment être activée lors de la mise en service du servomoteur 1 ou en cas de panne, par exemple en cas de coupure de l'alimentation électrique du servomoteur 1.

Dans ce type de servomoteur, l'ensemble 4 de commande manuelle est disposé à l'intérieur d'une enceinte 8, à l'exception du volant 7, situé en dehors de l'enceinte 8. L'enceinte 8 inclut également les autres éléments du servomoteur 1, comme l'ensemble moteur 2, l'ensemble 3 de détection de position, et l'ensemble 4 de commande manuelle. L'enceinte 8 comprend également deux entrées de câble 9, une entrée de câble 9 destinée à recevoir un câble d'alimentation électrique de l'ensemble moteur 2, permettant la commande de l'ensemble moteur 2 par un système externe de commande, ainsi qu'une entrée de câble 9 destinée à recevoir un câble de transmission de données permettant de transmettre au système de commande des données relatives notamment à la position de l'élément mécanique. Les entrées de câble 9 se font généralement à l'aide d'un presse-étoupe.

Lors d'une intervention sur un servomoteur, il peut être nécessaire d'accéder rapidement aux différentes parties du servomoteur. C'est particulièrement le cas lors d'une intervention dans une centrale nucléaire, car il est très risqué et très coûteux de prolonger l'intervention.

Le servomoteur illustré à la figure 1 ne permet pas une intervention rapide. En effet, la dépose du servomoteur est une opération lourde, car il faut séparer l'ensemble du servomoteur de l'élément mécanique actionné par le servomoteur. De plus, l'accès aux différentes parties du servomoteur à l'intérieur de l'enceinte est particulièrement complexe. En outre, une fois le servomoteur déposé, il n'est plus possible d'utiliser la commande manuelle qui fait partie du servomoteur.

Un servomoteur selon l'état de la technique est par ailleurs connu du document FR-A-2 898 393. L'invention vise à remédier à ces inconvénients.

L'invention propose un servomoteur permettant d'intervenir rapidement et efficacement sur les différents composants du servomoteur, en particulier sur l'ensemble moteur et l'ensemble de détection de position, tout en continuant à pouvoir actionner la commande manuelle du servomoteur.

L'invention a ainsi pour objet un servomoteur comprenant un ensemble moteur apte à générer un mouvement d'un élément mécanique, un ensemble de détection de position de l'élément mécanique, et un ensemble de commande manuelle de l'élément mécanique, ledit ensemble de commande manuelle étant disposé à l'intérieur d'une enceinte dite principale, ledit ensemble de commande manuelle étant actionné par des moyens actionnant situés en dehors de l'enceinte principale, ladite enceinte principale étant en outre reliée à l'ensemble moteur et à l'ensemble de détection de position.

Dans le servomoteur selon l'invention, l'ensemble de détection de position et l'ensemble moteur sont disposés chacun à l'intérieur d'une enceinte (10,11) distincte de ladite enceinte principale et reliées à elle de façon amovible, de sorte que l'ensemble de commande manuelle peut être actionné lorsque les enceintes dans lesquelles sont disposés l'ensemble de détection de position et l'ensemble moteur sont séparées de l'enceinte principale.

La commande manuelle peut ainsi être actionnée, même lorsque l'ensemble de détection de position est déposé. Ceci n'est pas possible avec un servomoteur classique, car l'ensemble de détection de position n'est pas un sous-ensemble amovible.

Les enceintes dans lesquelles sont disposés l'ensemble de détection de position et l'ensemble moteur peuvent être vissées sur l'enceinte principale.

Le servomoteur comprend avantageusement un connecteur, relié de façon amovible à l'ensemble de détection de position et apte à connecter l'ensemble de détection de position à un câble de transmission de données. L'ensemble de détection de position contient le détecteur de position, le câblage et l'embase du connecteur. La dépose de l'ensemble de détection de position ne nécessite donc aucun décâblage.

L'ensemble moteur peut transmettre un couple à l'élément mécanique. Dans ce cas, l'ensemble de détection de position comprend avantageusement un système de mesure du couple transmis.

Le système de mesure du couple transmis peut comprendre un limiteur d'effort.

L'ensemble de détection de position peut comprendre un accouplement, typiquement un accouplement rapide, apte à lier mécaniquement l'ensemble de détection de position à l'élément mécanique. Un accouplement rapide permet de remonter rapidement l'ensemble de détection de position.

Le servomoteur peut comprendre un connecteur relié de façon amovible à l'enceinte principale et apte à connecter un câble d'alimentation électrique à un circuit de connexion de l'enceinte principale, ledit circuit de connexion étant apte à être connecté à l'ensemble moteur.

L'ensemble moteur peut comprendre un élément de connexion électrique apte à être relié de façon amovible au circuit de connexion de l'enceinte principale.

L'invention a également pour objet l'utilisation d'un servomoteur décrit ci-dessus dans une centrale nucléaire.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1, déjà décrite, illustre schématiquement un servomoteur de l'état de la technique,
- la figure 2 illustre schématiquement un servomoteur selon l'invention, et
- les figures 3 et 4 sont des vues de détail de sous-ensembles du servomoteur selon l'invention.

Le servomoteur 1 selon l'invention, tel qu'illustré à la figure 2, sur laquelle les éléments identiques à ceux de la figure 1 portent les mêmes références, comprend un ensemble moteur 2 apte à générer un mouvement d'un élément mécanique, l'élément mécanique étant typiquement une vanne, un ensemble 3 de détection de position de l'élément mécanique, ainsi qu'un ensemble 4 de commande manuelle de l'élément mécanique disposé dans une enceinte principale 8. L'ensemble moteur 2 et l'ensemble 3 de détection de position sont adjacents à l'ensemble 4 de commande manuelle. L'ensemble 4 de commande manuelle est actionné par un volant 7 de commande manuelle disposé en dehors de l'enceinte principale 8.

Conformément à l'invention, l'ensemble 3 de détection de position et l'ensemble moteur 2 sont disposés à l'intérieur d'enceintes distinctes de ladite enceinte principale 8. L'ensemble 3 de détection de position est ainsi disposé à l'intérieur d'une enceinte 10 et l'ensemble moteur 2 est disposé à l'intérieur d'une enceinte 11. En outre, l'enceinte 10 de l'ensemble 3 de détection de position et l'enceinte 11 de l'ensemble moteur 2 sont reliées de façon amovible à l'enceinte principale 8, par exemple par vissage. De cette façon, l'ensemble 4 de commande manuelle peut être actionné lorsque l'enceinte 10 de l'ensemble 3 de détection de position et l'enceinte 11 de l'ensemble moteur 2 sont séparées de l'enceinte principale 8.

Un connecteur 14 est relié de façon amovible à l'enceinte principale 8. Le connecteur 14 est destiné à connecter un câble d'alimentation électrique à un circuit de connexion de l'enceinte principale 8 apte à être connecté à l'ensemble moteur 2. Le câble d'alimentation électrique permet de transmettre la commande en provenance du système externe de commande jusqu'à l'ensemble moteur 2, via le circuit de connexion disposé dans l'enceinte principale 8.

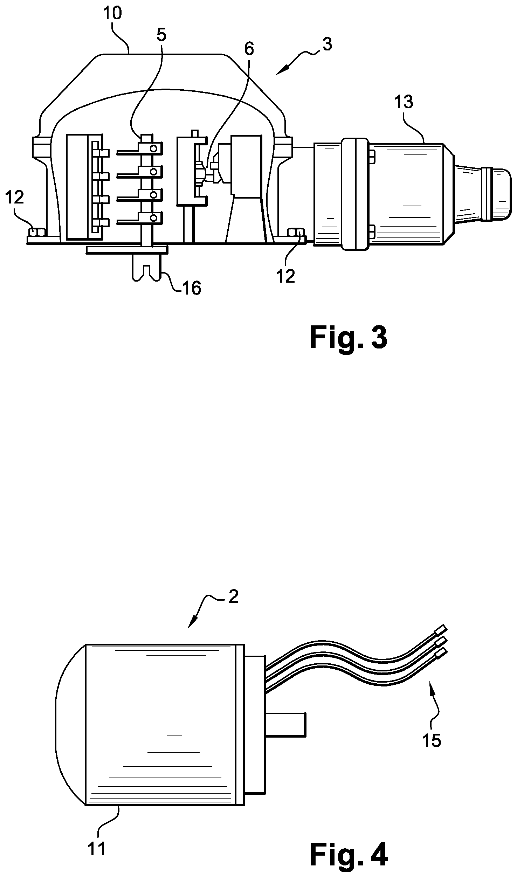

L'ensemble 3 de détection de position, tel qu'illustré à la figure 3, comprend un système 5 de détection de fin de course et un limiteur d'effort 6. L'ensemble 3 de détection de position est muni de vis de fixation 12, accessibles de l'extérieur, et qui permettent de connecter l'ensemble 3 de détection de position à l'enceinte principale 8. Pour faciliter le démontage du servomoteur 1, l'ensemble 3 de détection de position est en outre relié de façon amovible, par exemple par vissage, à un connecteur 13. Le connecteur 13 est apte à connecter l'ensemble 3 de détection de position à un câble de transmission de données destiné au système de commande externe.

Pour faciliter la connexion et la déconnexion de l'ensemble 3 de détection de position à l'enceinte principale 8, l'ensemble 3 de détection de position comprend un accouplement rapide 16 apte à lier mécaniquement l'ensemble 3 de détection de position à un arbre de sortie relié à la vanne.

La dépose de l'ensemble 3 de détection de position peut ainsi s'effectuer simplement et rapidement, puisqu'il suffit de déconnecter le connecteur 13, puis de retirer les vis 12 pour extraire l'ensemble 3 de détection de position.

Pour connecter l'ensemble moteur 2 au circuit de connexion de l'enceinte principale 8, l'ensemble moteur 2 comprend un élément de connexion électrique 15 apte à être relié de façon amovible au circuit de connexion de l'enceinte principale 8, tel qu'illustré à la figure 4. Dans le cas d'un moteur triphasé, l'élément de connexion électrique 15 comprend trois contacts électriques qui peuvent être clipsés à des contacts électriques correspondants du circuit de connexion de l'enceinte principale 8. L'ensemble moteur 2 possède ainsi sa propre connexion interne qui permet de le dissocier rapidement de l'enceinte principale 8, sans intervenir sur le connecteur 14.

La dépose de l'ensemble moteur 2 peut ainsi s'effectuer simplement et rapidement, puisqu'il suffit de retirer les vis de fixation de l'ensemble moteur 2, puis d'extraire l'ensemble moteur 2 et de déconnecter l'élément de connexion électrique 15.

Ainsi, grâce à la configuration du servomoteur 1 en sous-ensembles, la dépose de l'ensemble 3 de détection de position et de l'ensemble moteur 2 ne condamne pas la commande manuelle de la vanne.

## Revendications

1. Servomoteur (1) comprenant un ensemble moteur (2) apte à générer un mouvement d'un élément mécanique, un ensemble (3) de détection de position de l'élément mécanique, et un ensemble (4) de commande manuelle de l'élément mécanique, ledit ensemble (4) de commande manuelle étant disposé à l'intérieur d'une enceinte (8) dite principale, ledit ensemble (4) de commande manuelle étant actionné par des moyens actionnant (7) situés en dehors de l'enceinte principale (8), ladite enceinte principale (8) étant en outre reliée à l'ensemble moteur (2) et à l'ensemble (3) de détection de position, **caractérisé en ce que** l'ensemble (3) de détection de position et l'ensemble moteur (2) sont disposés chacun à l'intérieur d'une enceinte (10,11) distincte de ladite enceinte principale (8) et reliée à celle-ci de façon amovible, de sorte que l'ensemble (4) de commande manuelle peut être actionné lorsque les enceintes (10,11) dans lesquelles sont disposés l'ensemble (3) de détection de position et l'ensemble moteur (2) sont séparées de l'enceinte principale (8).

2. Servomoteur (1) selon la revendication 1, **caractérisé en ce que** les enceintes (10,11) dans lesquelles sont disposés l'ensemble (3) de détection de position et l'ensemble moteur (2) sont vissées sur l'enceinte principale (8).

3. Servomoteur (1) selon la revendication 1 ou 2, **caractérisé en ce qu'**il comprend un connecteur (13) relié de façon amovible à l'ensemble (3) de détection de position et apte à connecter l'ensemble (3) de détection de position à un câble de transmission de données.

4. Servomoteur (1) selon l'une des revendications 1 à 3, **caractérisé en ce que** l'ensemble moteur (2) transmet un couple à l'élément mécanique et **en ce que** l'ensemble (3) de détection de position comprend un système de mesure du couple transmis.

5. Servomoteur (1) selon la revendication 4, **caractérisé en ce que** le système de mesure du couple transmis comprend un limiteur d'effort (6).

6. Servomoteur (1) selon l'une des revendications 1 à 5, **caractérisé en ce que** l'ensemble (3) de détection de position comprend un accouplement rapide (16) apte à lier mécaniquement l'ensemble (3) de détection de position à l'élément mécanique.

7. Servomoteur (1) selon l'une des revendications 1 à 6, **caractérisé en ce qu'**il comprend un connecteur (14) relié de façon amovible à l'enceinte principale (8) et apte à connecter un câble d'alimentation électrique à un circuit de connexion de l'enceinte principale (8), ledit circuit de connexion étant apte à être connecté à l'ensemble moteur (2).

8. Servomoteur (1) selon la revendication 7, **caractérisé en ce que** l'ensemble moteur (2) comprend un élément de connexion électrique (15) apte à être relié de façon amovible au circuit de connexion de l'enceinte principale (8).

9. Utilisation d'un servomoteur (1) selon l'une des revendications 1 à 8 dans une centrale nucléaire.

## Patentansprüche

1. Servomotor (1), umfassend eine Motoreinheit (2), die imstande ist, eine Bewegung eines mechanischen Elements zu erzeugen, eine Positionsdektionseinheit (3) des mechanischen Elements und eine manuelle Steuereinheit (4) des mechanischen Elements zu verwalten, wobei die manuelle Steuereinheit (4) in einem Hauptgehäuse (8) angeordnet ist, wobei die manuelle Steuereinheit (4) von Betätigungsmitteln (7) betätigt wird, die sich außerhalb des Hauptgehäuses (8) befinden, wobei das Hauptgehäuse (8) ferner mit der Motoreinheit (2) und mit der Positionsdektionseinheit (3) verbunden ist, **dadurch gekennzeichnet, dass** die Positionsdektionseinheit (3) und die Motoreinheit (2) im Gehäusen (10, 11) angeordnet sind, die sich vom Hauptgehäuse (8) unterscheiden und mit ihm lösbar verbunden sind, so dass die manuelle Steuereinheit (4) betätigbar ist, wenn die Gehäuse (10, 11), in denen die Positionsdektionseinheit (3) und die Motoreinheit (2) angeordnet sind, vom Hauptgehäuse (8) getrennt sind.

2. Servomotor (1) nach Anspruch 1, **dadurch gekennzeichnet, dass** die Gehäuse (10, 11), in denen die Positionsdektionseinheit (3) und die Motoreinheit (2) angeordnet sind, auf das Hauptgehäuse (8) geschraubt sind.

3. Servomotor (1) nach Anspruch 1 oder 2, **dadurch gekennzeichnet, dass** er einen Verbinder (13) umfasst, der lösbar mit der Positionsdektionseinheit (3) verbunden und imstande ist, die Positionsdektionseinheit (3) an ein Datenübertragungskabel anzuschließen.

4. Servomotor (1) nach einem der Ansprüche 1 bis 3, **dadurch gekennzeichnet, dass** die Motoreinheit (2) dem mechanischen Element ein Moment überträgt und dass die Positionsdektionseinheit (3) ein Messsystem des übertragenen Moments umfasst.

5. Servomotor (1) nach Anspruch 4, **dadurch gekennzeichnet, dass** das Messsystem des übertragenen Moments einen Kraftbegrenzer (6) umfasst.

6. Servomotor (1) nach einem der Ansprüche 1 bis 5, **dadurch gekennzeichnet, dass** die Positionsdektionseinheit (3) eine Schnellkopplung (16) umfasst, die imstande ist, die Positionsdektionseinheit (3) mit dem mechanischen Element mechanisch zu verbinden.

7. Servomotor (1) nach einem der Ansprüche 1 bis 6, **dadurch gekennzeichnet, dass** er einen Verbinder (14) umfasst, der lösbar mit dem Hauptgehäuse (8) verbunden und imstande ist, ein Stromversorgungskabel mit einem Verbindungskreis des Hauptgehäuses (8) zu verbinden, wobei der Verbindungskreis imstande ist, mit der Motoreinheit (2) verbunden zu sein.

8. Servomotor (1) nach Anspruch 7, **dadurch gekennzeichnet, dass** die Motoreinheit (2) ein elektrisches Anschlusselement (15) umfasst, das imstande ist, mit dem Verbindungskreis des Hauptgehäuses (8) lösbar verbunden zu sein.

9. Verwendung eines Servomotors (1) nach einem der Ansprüche 1 bis 8 in einem Kernkraftwerk.

## Claims

1. A servomotor (1) comprising a motor assembly (2) able to generate a movement of a mechanical element, an assembly (3) for detecting the position of the mechanical element, and an assembly (4) for manually controlling the mechanical element, said manual control assembly (4) being positioned inside a so-called primary enclosure (8), said manual control assembly (4) being actuated by actuating means (7) situated outside the primary enclosure (8), said primary enclosure (8) further being connected to the motor assembly (2) and to the position detection assembly (3), **characterized in that** the position detection assembly (3) and the motor assembly (2) are each arranged inside an enclosure (10, 11) separate from said primary enclosure (8) and removably connected to the latter, such that the manual control assembly (4) can be actuated when the enclosures (10, 11) in which the position detection assembly (3) and the motor assembly (2) are positioned are separated from the primary enclosure (8).

2. The servomotor (1) according to claim 1, **characterized in that** the enclosures (10, 11) in which the position detection assembly (3) and the motor assembly (2) are positioned are screwed on the primary enclosure (8).

3. The servomotor (1) according to claim 1 or 2, **characterized in that** it comprises a connector (13) removably connected to the position detection assembly (3) and able to connect the position detection assembly (3) to a data transmission cable.

4. The servomotor (1) according to one of claims 1 to 3, **characterized in that** the motor assembly (2) transmits a torque to the mechanical elements and **in that** the position detection assembly (3) comprises a system for measuring the transmitted torque.

5. The servomotor (1) according to claim 4, **characterized in that** the system for measuring the transmitted torque comprises a force limiter (6).

6. The servomotor (1) according to one of claims 1 to 5, **characterized in that** the position detection assembly (3) comprises a quick coupling (16) able to mechanically connect the position detection assembly (3) to the mechanical element.

7. The servomotor (1) according to one of claims 1 to 6, **characterized in that** it comprises a connector (14) removably connected to the primary enclosure (8) and able to connect a power cable to a connection circuit of the primary enclosure (8), said connection circuit being able to be connected to the motor assembly (2).

8. The servomotor (1) according to claim 7, **characterized in that** the motor assembly (2) comprises an electrical connecting element (15) able to be removably connected to the connection circuit of the primary enclosure (8).

9. A use of a servomotor (1) according to one of claims 1 to 8 in a nuclear power plant.
